Europäisches Patentamt

European Patent Office

Office européen des brevets

(11) Publication number: **0 408 254 A1**

# EUROPEAN PATENT APPLICATION

(21) Application number: 90307365.8

(22) Date of filing: 05.07.90

(51) Int. Cl.⁵: **F16D 65/22**

(30) Priority: 13.07.89 GB 8916049
12.12.89 GB 8928011

(43) Date of publication of application:
16.01.91 Bulletin 91/03

(84) Designated Contracting States:
DE FR GB IT SE

(71) Applicant: LUCAS INDUSTRIES PUBLIC LIMITED COMPANY
Great King Street
Birmingham, B19 2XF(GB)

(72) Inventor: Thompson, Richard Edgar
5 Claypatch Road, Wyesham
Monmouth, Gwent NP5 3PN(GB)
Inventor: Blewitt, Andrew John
3 The Birches, West Pontnewydd
Cwmbran, Gwent NP44 4LL(GB)

(74) Representative: Waite, Anthony William et al
MARKS & CLERK Alpha Tower Suffolk Street
Queenswayway
Birmingham B1 1TT(GB)

(54) Cam type brake actuator.

(57) A brake actuator includes a rotatably mounted cam shaft (11) arranged with the cam (16) disposed between a pair of opposed tappets so that rotation of the cam separates the tappets to urge a pair of braking elements into engagement with a rotatable braking surface. The cam shaft includes first and second distinct cam shaft parts (10 and 11) rotatably supported on relatively fixed structure (7). The cam (16) is carried by and rotatable with the first cam shaft part (10). The cam shaft parts are interconnected in driving engagement so that rotation of the second part (11) causes rotation of the cam to actuate the braking elements.

FIG 2

## CAM TYPE BRAKE ACTUATOR

This invention relates to a brake actuator of the general kind in which a rotatably mounted cam shaft has a cam arranged so that rotation of the cam shaft causes the cam, in use, to separate a pair of braking elements into braking engagement with a rotatable braking surface.

In one example of a conventional mechanism of this general kind, illustrated in BP919407, the cam shaft has an integrally formed cam and is rotatably mounted in spaced bearings adjacent its respective ends, the cam being adjacent one end of the shaft and disposed internally of an associated brake and the other end of the shaft being connected to an air actuating device which rotates the cam shaft for actuation of the brake. The length of the cam shaft required can differ considerably depending on the particular installation and since the cam shaft forms part of the manufactured brake assembly, it can be necessary for a vehicle manufacturer to stock several different brake assemblies for use, for example, on different vehicles and requiring different cam shaft lengths. Moreover, since the load on the cam shaft support bearings can differ with the length of the cam shaft, inconsistent bearing life and consequently variable service life can result.

An object of the present invention is to provide a brake actuator in which the aforesaid drawbacks are alleviated or eliminated.

According to the invention, an actuator of the aforesaid general kind comprises first and second distinct cam shaft parts rotatably supported on relatively fixed structure, a cam carried by and rotatable with said first cam shaft part, said parts being interconnected in driving engagement, whereby rotation of the second part, in use, by actuating means causes rotation of the cam to actuate an associated brake.

With such an arrangement, the first cam shaft part, which may be a standard component, can be assembled into brake mechanism during manufacture with the second shaft part selected from a range of lengths suited to the requirements of the vehicle to which the brake mechanism is to be fitted.

The first and second cam shaft parts are conveniently interconnected in a releasable manner to facilitate dismantling of the brake for servicing, for example.

In a preferred arrangement, the first cam shaft part is mounted in at least one but preferably two axially spaced bearings, conveniently carried by housing means separable from the structure carrying the second shaft part. The load on the cam shaft bearings is thereby reduced, leading to longer service life of the cam shaft. Typically, said housing means carrying the two bearings is secured to or integral with torque plate of the brake, the second cam shaft part being supported within a tube secured to the housing in releasable manner.

In a practical arrangement, the second cam shaft part may comprise an elongate body having a drive formation adjacent the cam end thereof in driving engagement with a corresponding formation on the first cam shaft part, and a force input formation adjacent its end remote from the cam and adapted to be engaged with drive means for the actuator.

The elongate body may be a shaft having said drive and force input formations integral therewith. Alternatively the elongate body may be a hollow tube having a drive member and a force input member secured to the respective ends thereof.

The invention will now be described, by way of example, with reference to the accompanying drawings in which:-

Figure 1 is a front elevation of one form of vehicle internal shoe drum brake incorporating the actuator of the invention;

Figure 2 is a section along the line A-A of Figure 1 and illustrates one embodiment of the actuator of the invention to an enlarged scale, and

Figure 3 is a view similar to Figure 2 illustrating an alternative embodiment of the actuator of the invention.

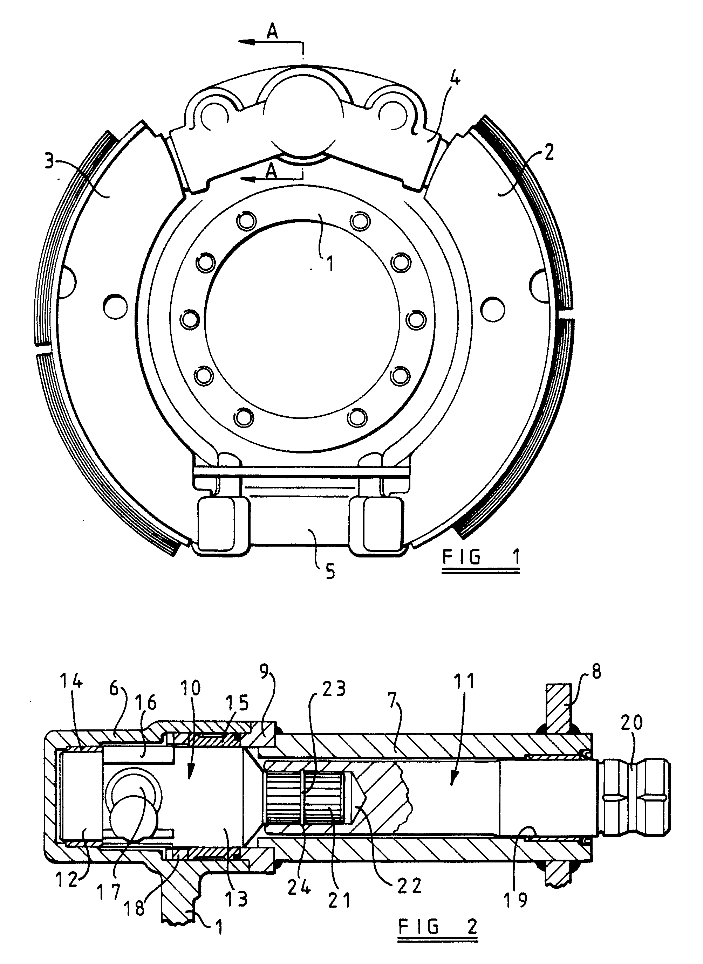

Referring to Figure 1 of the drawings, the internal shoe drum brake shown therein has a torque plate 1 carrying a pair of brake shoes 2, 3. An actuator 4 is carried by the torque plate between one pair of adjacent shoe ends, a casing of the actuator being secured to or formed integrally with the torque plate. The actuator is operable to move the shoes outwardly into braking engagement with a surrounding brake drum (not shown) against the action of shoe return spring means (not shown). The other pair of adjacent shoe ends engage a torque-reacting abutment member 5 rigidly fixed to or integral with the torque plate. The brake illustrated would normally act as a leading/trailing shoe brake with each of the shoes playing a leading or trailing role depending upon the direction of rotation of the brake drum, as will be well understood by those familiar with the art.

One form of the actuator of the invention is illustrated in greater detail in Figure 2. Part of the brake torque plate 1 is illustrated and can be seen to be integrally formed with a cam housing 6 forming part of the actuator casing. Arranged in axial alignment with the longitudinal axis of the housing 6 is a cam shaft support tube 7, of which the end remote from the casing 6 has secured thereto, as by welding, a bracket 8 arranged to carry a power device (not shown). The opposite end of the tube is secured to a mounting flange 9 which may conveniently be secured to the housing 6 by bolts or similar means.

The cam shaft is composed of a first portion, indicated generally at 10 and a second portion indicated generally at 11. The first cam shaft portion 10 has a pair of axially spaced coaxial cylindrical portions 12, 13 supported in respective bearings 14, 15 which are illustrated as plain sleeve bearings but may take any other convenient form. A cam element 16 is disposed between the cylindrical portions 12, 13 and would, by way of example, be of the type containing diametrically opposed pockets within which are received oppositely extending actuating struts, one of which can be seen at 17, which engage respectively with opposed tappets slidable in the actuator casing and transmit to the latter the actuating force arising from rotation of the cam shaft, in conventional manner. Part of an automatic adjusting mechanism is illustrated at 18 but is not described in detail, since it forms no part of the present invention.

The cam shaft portion 11 is rotatably supported within the tube 7 by way of a further bearing, shown for convenience as a plain bearing 19. An outwardly extending portion 20 of the cam shaft portion 11 is splined or provided with other convenient formations for the attachment of an actuating lever or similar device movable angularly by a power device, such as an air actuator (not shown). A rotary driving connection between the cam shaft parts 10 and 11 is effected by the interengagement of a splined cylindrical portion 21 of the part 10 within a correspondingly splined bore 22 of the part 11. In the example illustrated, the cam shaft portions are releasably locked together axially by means of a snap ring or similar device 23 carried by the splined part 21 and snap-engaging within a groove 24 in a wall of the bore 22. Rotation of the cam shaft causes the cam 16 to separate the tappets and expand the brake shoes, in conventional manner.

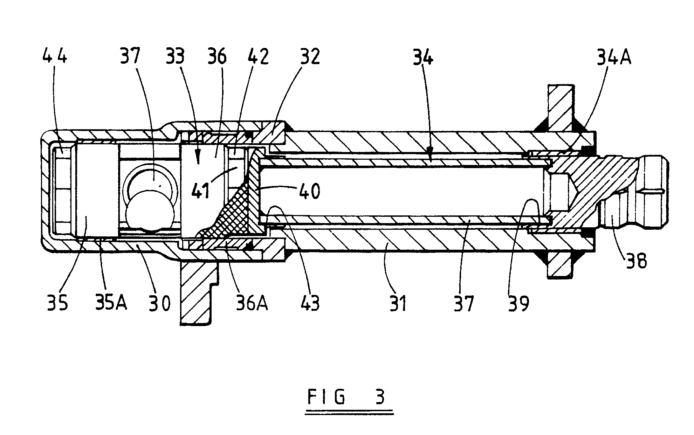

The alternative embodiment of the actuator of the invention illustrated in Figure 3 is generally similar to that of Figure 2 in having a cam housing 30 and an axially aligned cam shaft support tube 31 connected to the housing by way of a mounting flange 32, as previously. The cam shaft is composed of two portions 33, 34, of which the first portion 33 has a pair of axially spaced rotatably supported coaxial cylindrical portions 35, 36 rotatably supported in spaced bearings 35A, 36A and a cam element 37 is disposed between the cylindrical portions 35, 36 and arranged, as previously, in relation to actuating struts engaged respectively with opposed brake actuating tappets. The end of the cam shaft portion 34 remote from the cam element is supported relative to the tube 31 by a further bearing 34A.

In this embodiment, the cam shaft portion 34 is prefabricated from three separate components, one of which is a tube 37, to one end of which is secured a connector member 38 which is splined or provided with other convenient formations for the attachment of an actuating lever or similar device movable angularly by a power device, such as an air actuator (not shown). In the particular arrangement described, the member 38 is provided at its inner end with a socket 39 which receives an end portion of the tube 37 secured therein, as by press fitting or other mechanical locking expedient and/or by welding. To the opposite end of the tube 37 is secured a drive member 40 which carries dogs 41 forming a driving connection with the cam shaft portion 33 by way of a similarly formed dog drive on part 42 of cam 33; the driving connection may alternatively be in the form of a key or other appropriate device. The drive member 40 forms a socket 43 within which is received the inner end of the tube 37 and secured therein by press fitting or other mechanical means, and/or by welding. Rotation of the cam shaft causes the cam 37 to separate the tappets and expand the brake shoes, in conventional manner. It will be seen that the cylindrical portion 35 of the cam portion 33 is formed with an identical axially projecting dog formation 44 to that at 42, thereby obviating the requirement for making cam components of opposite hand.

One advantage of the actuator arrangement described above is that it is only necessary to manufacture one version of the relatively complicated cam shaft part 10 for assembly into the brake housing since a cam shaft part 11, having a length to suit the particular brake installation concerned may subsequently be attached to the part 10. This obviates the necessity to stock a plurality of versions of the same brake assembly for different brake installations. Moreover, it is a relatively simple matter to gain access to the first cam shaft portion 10, for servicing purposes for example, by disconnecting the flange 9, from the housing 6, and withdrawing the support tube 7, and the cam shaft portion 11, the latter being moved axially sufficiently to disconnect it from the splined part 21. Access can therefore be gained to the brake actuating mechanism within the housing 6 without the necessity to remove the brake drum and other brake components. The twin-bearing support arrangement for the cam shaft part 10 gives rise to relatively low bearing wear rates and a correspondingly extended service life.

The actuator illustrated in Figure 2 has the advantages enumerated in relation to Figure 1, and the additional one that the prefabricated nature of the cam shaft part 34 enables it to be readily manufactured to suit the particular brake installation into which it is to be fitted, by cutting an appropriate length of tube 37 from tubular stock and securing thereto the components 38 and 40. This obviates the necessity to stock a plurality of versions of the same actuator for different brake installations. The components of the cam shaft part 34 may be of the same material, such as a suitable metal or rigid plastic; alternatively, some or all of the three components may be of different materials, the manner of connecting the components together being chosen appropriately. Additionally, the use of the tube 37 as distinct from a solid shaft provides a significant weight saving in the actuator.

**Claims**

1. A brake actuator comprising a rotatably mounted cam shaft having a cam (37) arranged so that rotation of the cam shaft causes the cam, in use, to separate a pair of braking elements into engagement with a rotatable braking surface, characterised by the cam shaft having first and second distinct parts (10, 11) rotatably supported on relatively fixed structure (6, 7), in that the part (10) carries a cam (16) rotatable therewith, and in that said parts are interconnected in driving engagement, whereby rotation of the second part, in use, by actuating means causes rotation of the cam to actuate an associated brake.

2. A brake actuator according to Claim 1, characterised in that the cam shaft parts (10, 11) are interconnected in a releasable manner.

3. A brake actuator according to Claim 1 or Claim 2, characterised in that the first cam shaft part (10) is mounted in at least one bearing (14, 15) carried by housing means (6) separable from structure (7) carrying the second cam shaft part (11).

4. A brake actuator according to Claim 3, characterised in that the first cam shaft part (10) is mounted in a pair of axially spaced bearings (14, 15) carried by said housing means (6).

5. A brake actuator according to Claim 3 or Claim 4 characterised in that said housing means (6) is secured to or integral with a torque plate (1) of the brake, the second cam shaft part (11) being supported within a tube (7) secured to the housing (6) in releasable manner.

6. A brake actuator according to any one of the preceding claims, characterised in that the second cam shaft part (11) is an elongate body having a drive formation (22) adjacent the cam end thereof in driving engagement with a corresponding formation (21) on the first cam shaft part, and a force input formation (20) adjacent its end remote from the cam and adapted to be engaged with drive means for the actuator.

7. A brake actuator according to Claim 6, characterised in that the elongate body is a shaft (11) having the drive and force input formations (22, 20) integral therewith.

8. A brake actuator according to Claim 6, characterised in that the elongate body (37) is a hollow tube having a drive member (40) and a force input member (38) secured to the respective ends thereof.

9. A brake actuator according to Claim 8, characterised in that the drive member (40) has a dog formation (41) engaged with a corresponding formation (42) on the first cam shaft part (33).

10. A brake actuator to Claim 9, characterised in that the first cam shaft part (33) has identical dog formations (42, 44) on either end thereof.

11. A brake incorporating an actuator according to any one of the preceding claims.

A

3

A

4

2

1

5

FIG   1

14  6  16  10  15  9  23  7  11  8  20

12  17  18  1  13  24  21  22  19

FIG   2

FIG 3

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-B-1 144 607 (HENSCHEL) <br> * column 1, lines 7-20; column 2, lines 38-43; figure 1 * <br> – – – | 1-4,6-8 | F 16 D 65/22 |
| X | DE-U-1 819 636 (DEUTSCHE PERROT-BREMSE) <br> * the whole document * <br> – – – | 1,2 | |
| A | US-A-4 200 174 (BORUGIAN et al.) <br> – – – | | |
| A | US-A-3 204 482 (BEHNKE) <br> – – – | | |
| D,A | GB-A-9 194 07 (ROCKWELL-STANDARD) <br> – – – – – | | |

**TECHNICAL FIELDS SEARCHED (Int. Cl.5)**

F 16 D

The present search report has been drawn up for all claims

| Place of search | Date of completion of search | Examiner |
|---|---|---|
| Berlin | 18 October 90 | LUDWIG H J |